# EUROPEAN PATENT SPECIFICATION

(11) **EP 3 633 282 B1**
(45) Date of publication and mention of the grant of the patent: **13.09.2023**
(21) Application number: 17912014.2
(22) Date of filing: 02.06.2017
(51) Int. Cl.: F24F 11/74, F24F 11/30, F24F 11/36, F24F 11/43, F24F 11/63, F24F 11/76, F24F 11/77, F24F 110/10, F24F 130/00, F24F 11/89

(54) **AIR CONDITIONING DEVICE**
KLIMATISIERUNGSVORRICHTUNG
DISPOSITIF DE CLIMATISATION

(43) Date of publication of application: 08.04.2020
(73) Proprietor: Mitsubishi Electric Corporation, Chiyoda-ku Tokyo 100-8310 (JP)
(72) Inventor: YAMATANI, Takahiro, Tokyo 100-8310 (JP); OKAJIMA, Jiro, Tokyo 100-8310 (JP); TSUTSUMI, Hiroshi, Tokyo 100-8310 (JP)
(74) Representative: Pfenning, Meinig & Partner mbB
(86) International application number: PCT/JP2017/020556
(87) International publication number: WO 2018/220810

(56) References cited:
- WO-A1-2017/002215
- JP-A- 2002 005 548
- JP-A- 2002 372 317
- JP-A- 2016 125 694
- JP-A- 2016 125 694
- JP-A- 2016 173 224
- JP-A- 2017 015 324
- JP-A- 2017 053 517
- JP-A- 2017 053 517
- JP-A- 2017 083 083
- US-A1- 2009 107 157
- US-A1- 2009 107 157

## Description

### Technical Field

The present invention relates to an air-conditioning device, and more particularly, to an air-conditioning device having a refrigerant leakage detection function.

### Background Art

Shift to low-GWP refrigerants in air-conditioning devices has been increasingly required for environmental protection and under refrigerant regulations of individual countries. GWP stands for Global Warming Potential. Packaged air-conditioning apparatuses and building multi-air-conditioning apparatuses need to reduce GWP using a mildly flammable refrigerant such as R32 or a natural refrigerant. Air-conditioning devices using conventional R410A refrigerant or non-flammable refrigerants, which have a lower risk against refrigerant leakage than R32 or other similar refrigerants, are not equipped with a refrigerant leakage detection device or protection control against leakage.

In using mildly flammable refrigerant to reduce GWP, it is important to ensure safety against refrigerant leakage and it is necessary to perform operation control by detecting any refrigerant leakage from the air-conditioning device. Therefore, for example, Patent Literature 1 discloses a technique for detecting refrigerant leakage by a refrigerant leakage sensor provided in a room. Besides, a technique is proposed for stopping a compressor and stopping refrigerant supply to an indoor unit when refrigerant leakage is detected by a refrigerant sensor.
The JP 2016 125 694 A aims at providing an air conditioner indoor unit capable of accurately determining whether refrigerant leak has occurred. To this end, a floor-standing indoor unit with refrigerant pipes, a heat exchanger implementing heat exchange between refrigerant flowing in the pipes and air, as well as an indoor fan which generates an air flow passing through the heat exchanger is equipped with temperature sensors and a determination unit that determines whether refrigerant leaks on the basis of detection results of the temperature sensors when driving of the indoor fan is stopped. This document discloses the preamble of claim 1.

### Citation List

### Patent Literature

Patent Literature 1: WO2011/099056

### Summary of Invention

### Technical Problem

When a refrigerant leakage sensor is placed in an indoor unit of an air-conditioning device, any leaking refrigerant is diffused by operation of a fan in the indoor unit, and it is difficult to detect the refrigerant leakage promptly. As a result, operation is continued while the refrigerant is leaking, and the refrigerant leakage becomes detectable only after refrigerant concentration in suctioned air increases to such a level as to be detected by the refrigerant leakage sensor.

Also, in a ceiling embedded indoor unit, air above a ceiling may be suctioned through an intake grille in the ceiling. Also in this case, it becomes difficult to detect refrigerant leakage promptly by being affected by an air current of air supply to another indoor unit.

The present invention has been made to solve the above problem, and an object thereof is to provide an air-conditioning device capable of detecting refrigerant leakage during operation at an early stage.

### Solution to Problem

The invention is set out in the appended set of claims.

### Advantageous Effects of Invention

By stopping the fan during operation of the air-conditioning device and thereby making a leakage detection check, an embodiment of the present invention allows early detection of any refrigerant leaking during operation.

### Brief Description of Drawings

[Fig. 1] Fig. 1 is a schematic configuration diagram showing an example of an air-conditioning device according to Embodiment 1 of the present invention.
[Fig. 2] Fig. 2 is a diagram illustrating by way of example operation patterns of a refrigerant sensor and fan in refrigerant leakage checking control.
[Fig. 3] Fig. 3 is a flowchart of refrigerant leakage detection control performed by the air-conditioning device according to Embodiment 1 of the present invention.
[Fig. 4] Figs. 4(a) to 4(c) are diagrams illustrating by way of example operation patterns of a refrigerant sensor and fan in refrigerant leakage checking control according to a variation.
[Fig. 5] Fig. 5 is a schematic configuration diagram showing an example of an air-conditioning device according to Embodiment 2 of the present invention.
[Fig. 6] Fig. 6 is a flowchart explaining refrigerant leakage checking control performed by the air-conditioning device according to Embodiment 2 of the present invention.

### Description of Embodiments

An air-conditioning device according to an embodiment of the present invention performs refrigerant leakage detection control using a fan and refrigerant leakage sensor. Of air-conditioning devices, the embodiment can be applied, for example, to a building multi-air-conditioning apparatus equipped with plural indoor units.

### Embodiment 1

### <Configuration of air-conditioning device>

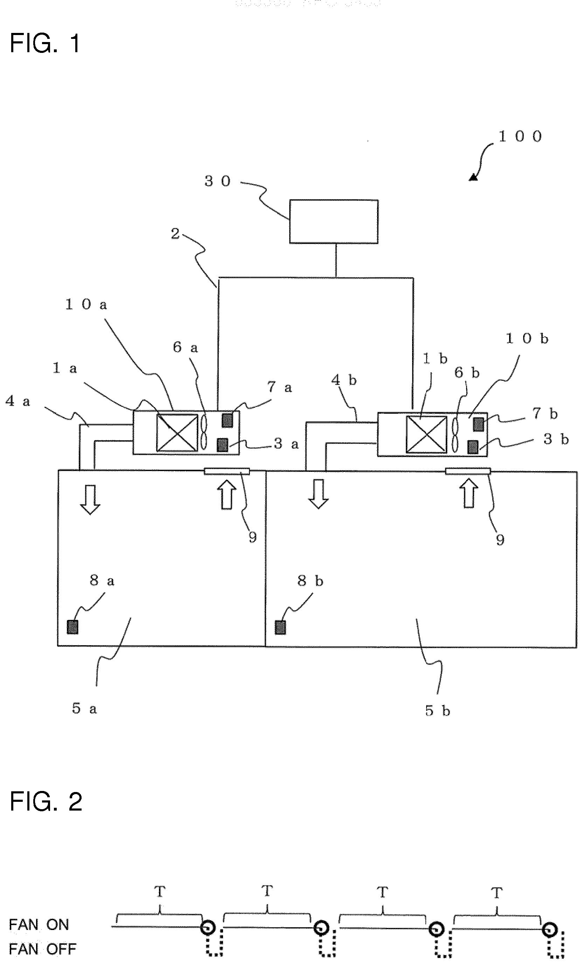

Fig. 1 is a schematic configuration diagram showing an example of an air-conditioning device 100 according to Embodiment 1 of the present invention. As shown in Fig. 1, the air-conditioning device 100 is made up of an indoor unit 10a, an indoor unit 10b, and an outdoor unit 30. The indoor unit 10a is placed in a room 5a and the indoor unit 10b is placed in a room 5b larger than the room 5a. The outdoor unit 30 includes compression equipment configured to compress refrigerant and an outdoor heat exchanger configured to exchange heat between outdoor air and the refrigerant. The outdoor unit 30 is connected with each of the indoor units 10a and 10b by outdoor unit connecting pipes 2. Refrigerant compressed by operation of a compressor circulates by flowing in and out of the indoor unit 10a and indoor unit 10b from the outdoor unit 30 through the outdoor unit connecting pipes 2. The indoor unit 10a and indoor unit 10b are connected to a refrigerant circuit through which the same refrigerant flows. As the refrigerant, a mildly flammable refrigerant such as R32, a natural refrigerant, or another low-GWP refrigerant is used.

The indoor unit 10a includes an indoor heat exchanger 1a, a fan 6a, a controller 7a, and a refrigerant sensor 3a. The refrigerant flowing in from the outdoor unit 30 through the outdoor unit connecting pipe 2 flows through the indoor heat exchanger 1a and then returns to the outdoor unit 30 through the outdoor unit connecting pipe 2. The fan 6a suctioned indoor air into the indoor unit 10a through an intake grille 9 and sends air to the room 5a through the indoor heat exchanger 1a and an outlet duct 4a. Consequently, the air suctioned into the indoor unit 10a is heat-exchanged with the refrigerant flowing through the indoor heat exchanger 1a to air-condition the room 5a via the indoor unit 10a.

The refrigerant sensor 3a is placed inside the indoor unit 10a, and detects any refrigerant in the air suctioned into the indoor unit 10a from the room 5a. The refrigerant sensor 3a can be configured to detect a refrigerant concentration equal to or higher than a reference value as refrigerant leakage. For example, a ceramic semiconductor sensor can be used as the refrigerant sensor 3a.

A remote control 8a is placed in the room 5a and allows a user to enter initial settings. Also, the remote control 8a allows the user to set an operation mode of the indoor unit 10a. Available operation modes include cooling operation, heating operation, defrosting operation, and other operations. The initial settings and operation mode specified via the remote control 8a is informed to the controller 7a and stored in the controller 7a.

The indoor unit 10b has a configuration similar to that of the indoor unit 10a and is placed in the room 5b larger in volume than the room 5a in which the indoor unit 10a is placed. Specifically, the indoor unit 10b includes an indoor heat exchanger 1b connected to the outdoor unit connecting pipe 2, a fan 6b, a controller 7b, and a refrigerant sensor 3b. The indoor heat exchanger 1b also transfers heat between the air suctioned by the fan 6b from the room 5b and the refrigerant flowing through the indoor heat exchanger 1b, sends air through an outlet duct 4b, and thereby air-conditions the room 5b. Also, a remote control 8b placed in the room 5b allows an operator to specify initial settings and an operation mode.

Fig. 2 is a diagram illustrating by way of example an operation pattern of the refrigerant sensor 3a and fan 6a in refrigerant leakage checking control. In Fig. 2, the solid lines indicate fixed-time control operation during cooling operation or heating operation while the broken lines indicate refrigerant leakage checking control. Also, the circles indicate time points at which the refrigerant sensor 3a checks for any leakage. Operations of the refrigerant sensor 3a and fan 6a will be described below, and the description similarly applies to the refrigerant sensor 3b and fan 6b.

As shown in Fig. 2, the refrigerant sensor 3a and fan 6a perform refrigerant leakage checking control at predetermined time intervals. The predetermined time interval is, for example, a fixed-time control interval T. In the refrigerant leakage checking control, by forcibly stopping the operation of the fan 6a performing normal operation, the refrigerant sensor 3a checks for any refrigerant. If no refrigerant leakage is detected by the refrigerant sensor 3a, the fan 6a resumes operation and returns to normal operation. That is, if refrigerant concentration in the air is equal to or lower than a reference value, the operation of the fan 6a is resumed. The fan 6a continues normal operation until the refrigerant sensor 3a performs a refrigerant checking operation the next time, i.e., until the fixed-time control interval T elapses.

If refrigerant leakage is detected by the refrigerant sensor 3a, operation of the compressor of the outdoor unit 30 is stopped and a flow of refrigerant circulating through the air-conditioning device 100 stops. Consequently, the refrigerant is no longer transported to the indoor unit 10a placed in the room 5a, and increases in the refrigerant concentration in the room 5a are prevented.

In this way, in the air-conditioning device 100, the operation of the fan 6a is stopped forcibly and the refrigerant sensor 3a checks for any refrigerant. Therefore, even if there is refrigerant leakage, the refrigerant does not diffuse, the refrigerant leakage can be detected before the refrigerant concentration in the room increases to a dangerous level, and the circulation of the refrigerant can be stopped at an early stage.

### <Determination of fixed-time control interval T>

The fixed-time control interval T, which is a time interval during which the fan 6a is stopped, is determined from reference value data, prestored in the air-conditioning device 100, based on initial settings. The reference value data is a digitized form of a relationship between the volume of a room and the time taken for the refrigerant concentration in the room to reach a minimum explosive concentration. Specifically, if refrigerant leaks in a room with a certain volume, the time interval from a point of time at which the refrigerant leakage occurred to a point of time at which the refrigerant concentration in the room reaches a minimum explosive concentration is calculated and a time interval shorter than the calculated time interval is determined as the fixed-time control interval T. Respective fixed-time control intervals T determined for plural different volumes are digitized and stored as reference value data in the air-conditioning device 100. Therefore, fixed-time control intervals T are determined according to the volumes of rooms. Note that the minimum explosive concentration refers to a critical concentration at or above which flammable gas explodes.

When the air-conditioning device 100 includes the indoor unit 10a and indoor unit 10b connected to the same refrigerant system, of the room 5a in which the indoor unit 10a is placed and the room 5b in which the indoor unit 10b is placed, the room 5a with the smaller volume is set as default. That is, of the rooms in which plural indoor units 10a and 10b are placed, respectively, the fixed-time control interval T is set based on the volume of the room 5a with the smaller volume. In the room 5a with the smaller volume, it is assumed that the time between a point of time at which refrigerant leakage occurs and a point of time at which the refrigerant concentration in the room reaches the minimum explosive concentration is short. If the fixed-time control interval T of the room 5a with the smaller volume is established, even if refrigerant leakage occurs immediately after a refrigerant leakage check, refrigerant leakage is checked for again and detected before the refrigerant concentration reaches the minimum explosive concentration.

Now, supposition is made that refrigerant leakage checking control is performed with the fan 6a in the indoor unit 10a kept operating in the air-conditioning device 100. When refrigerant leakage occurs, if a refrigerant leakage rate is high, the refrigerant sensor 3a is expected to be able to detect the refrigerant leakage promptly even if the fan 6a is operating. However, if the refrigerant leakage rate is low, the leaking refrigerant is diffused by the operation of the fan 6a, making it impossible to detect the refrigerant leakage promptly even if the refrigerant sensor 3a checks for refrigerant. For example, International Electrotechnical Commission standards, i.e., IEC standards, require that when the leakage rate is 2 kg/h, the leakage be detected within 60 seconds after the occurrence. When a supplied air flow rate of the fan 6a is high and air flow rate inside the fan 6a is high, it is difficult for the refrigerant sensor 3a to detect the refrigerant leakage promptly even if the leakage rate is high. Consequently, the refrigerant leakage will last for a long time and the refrigerant concentration in the entire room could reach the minimum explosive concentration.

In the air-conditioning device 100 according to the present embodiment, since the refrigerant sensor 3a checks for refrigerant with the fan 6a stopped, even if the refrigerant leakage rate is low or the flow rate of the fan 6a is low, the refrigerant is not diffused by the air sent by the fan 6a. This allows the refrigerant sensor 3a to detect any refrigerant leakage promptly, making it possible to stop the air-conditioning device 100 before the refrigerant concentration increases until reaching the minimum explosive concentration.

In a configuration in which the plural indoor units 10a and 10b are connected to the same refrigerant circuit, refrigerant leakage checking control is performed simultaneously in the indoor unit 10a and indoor unit 10b. Specifically, the fans 6a and 6b placed in the indoor units 10a and 10b are stopped simultaneously. Then, if any of the refrigerant sensors 3a and 3b placed in the respective indoor units 10a and 10b detects refrigerant leakage, operation of the air-conditioning device 100 is stopped. As a result, the compressor of the outdoor unit 30 stops transporting the refrigerant, thereby preventing the refrigerant from leaking further.

Therefore, in a configuration in which the indoor units 10a and 10b are connected to the same refrigerant system, even if refrigerant leaks from the indoor unit 10b placed in the smaller room 5a, the refrigerant leakage is detected before the refrigerant concentration reaches the minimum explosive concentration. Also, the configuration in which the fans 6a and 6b are stopped simultaneously prevents detection accuracy from being deteriorated by air currents from the adjacent indoor units 10a and 10b.

### <Refrigerant leakage checking control>

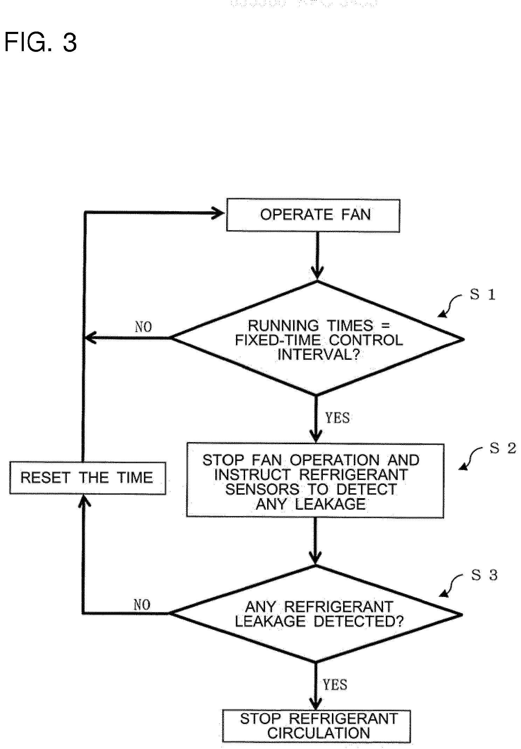

Fig. 3 is a flowchart of refrigerant leakage detection control performed by the air-conditioning device 100 according to Embodiment 1 of the present invention. As shown in Fig. 3, in the air-conditioning device 100, the controller 7a performs refrigerant leakage checking control at fixed-time control intervals T, which are predetermined time intervals.

In an initial state, the fans 6a and 6b perform normal operation according to the operation modes of the indoor units 10a and 10b. The operation modes may be those sets via the remote controls 8a and 8b.

In step S1, the controllers 7a and 7b determine whether running times of the fans 6a and 6b have reached the fixed-time control interval T, and continue normal operation of the fans 6a and 6b when it is determined that the fixed-time control interval T has not been reached. When it is determined that the fixed-time control interval T has been reached, the controllers 7a and 7b start implementing step S2.

Next, in step S2, the controllers 7a and 7b forcibly stop the operating fans 6a and 6b and instruct the refrigerant sensors 3a and 3b to detect any refrigerant.

Next, in step S3, the controllers 7a and 7b determine whether the refrigerant sensors 3a and 3b have detected refrigerant leakage. When it is determined in step S3 that no refrigerant leakage has been detected, the controllers 7a and 7b return to the initial state by resetting the running times of the fans 6a and 6b to zero and resume operation of the fans 6a and 6b. Then, operation of the fans 6a and 6b is continued until it is determined in step S1 that the running times have reached the fixed-time control interval T.

On the other hand, when it is determined in step S3 that the refrigerant sensors 3a and 3b have detected refrigerant leakage, the controllers 7a and 7b stop the compressor of the outdoor unit 30 and stop the flow of refrigerant circulating through the air-conditioning device 100. This makes it possible to prevent increases in the refrigerant concentration due to refrigerant leakage even when refrigerant leakage is detected.

In the above description, volume settings of the rooms 5a and 5b in which the plural indoor units 10a and 10b are placed are entered separately. The volumes of the plural rooms 5a and 5b can also be set by installing a controller configured to control operation of the entire air-conditioning device 100 and assigning individual addresses to the indoor units 10a and 10b. In this case, for example, during installation of the air-conditioning device 100 or on another similar occasion, the individual addresses of the indoor units 10a and 10b and information on the rooms 5a and 5b are set by being associated with each other. This makes it possible to automatically determine the fixed-time control interval based on the room with the smaller volume.

### <Variation>

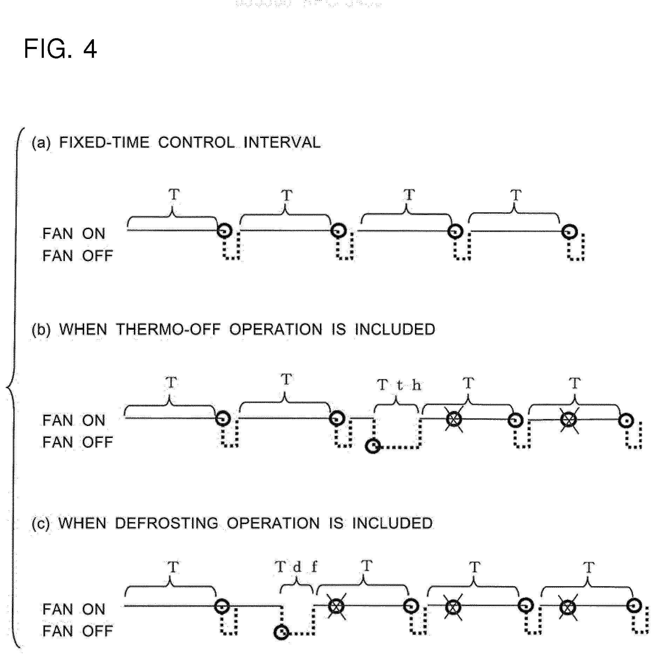

Figs. 4(a) to 4(c) are diagrams illustrating by example operation patterns of a refrigerant sensor and fan in refrigerant leakage checking control according to a variation. Fig. 4(a) shows fixed-time control operation during cooling operation or heating operation as with Fig. 2. Fig. 4(b) shows a case in which fixed-time control operation includes thermo-off operation and Fig. 4(b) shows a case in which fixed-time control operation includes defrosting operation.

As shown in Figs. 4(a) to 4(c), in the air-conditioning device 100 according to the variation, when thermo-off operation or defrosting operation is performed, refrigerant leakage checking control is performed according to the operation mode. In Figs. 4(a) to 4(c), the solid lines indicate normal operation and the broken lines indicate refrigerant leakage checking control. Also, the circles indicate time points at which refrigerant leakage checking control is performed and cross marks indicate cases in which refrigerant leakage checking control is skipped. Description will be given below exemplifying a case in which the indoor unit 10a performs thermo-off operation or defrosting operation, and the description similarly applies to the indoor unit 10b.

As shown in Figs. 4A to 4C, when the indoor unit 10a performs thermo-off operation or defrosting operation, the fan 6a stops operation during a time period Tth in which the indoor unit 10a performs thermo-off operation or during a time period Tdf in which the indoor unit 10a performs defrosting operation. The refrigerant sensor 3a detects refrigerant concentration while the operation of the fan 6a is suspended due to thermo-off operation or defrosting operation.

When the thermo-off operation or defrosting operation is finished, the running time of the fan 6a is reset to zero and normal operation is resumed. When the running time after the reset elapses the fixed-time control interval T, the operation of the fan 6a is stopped forcibly again and refrigerant leakage checking control is performed. That is, refrigerant leakage checking control is performed after a lapse of the time interval T rather than immediately after the finish of thermo-off operation or defrosting operation.

In this way, refrigerant leakage checking control is performed also when the operation of the fan 6a is stopped according to the operation mode of the indoor unit 10a. When the operation mode is switched to normal operation, i.e., to heating operation or cooling operation, the running time of the fan 6a is reset to zero. Consequently, the frequency of forcible stopping of the fan 6a can be reduced.

In the air-conditioning device 100 according to the embodiment of the present invention described above, by stopping the operation of the fans 6a and 6b during operation of the indoor units 10a and 10b, refrigerant is checked for by the refrigerant sensors 3a and 3b. Consequently, any refrigerant in the rooms in which the indoor units 10a and 10b are placed can be detected accurately without the air being diffused by the fans 6a and 6b. Therefore, any refrigerant leakage is detected before the refrigerant concentration reaches the minimum explosive concentration and the circulation of the refrigerant in the air-conditioning device 100 can be stopped.

Also, in a configuration in which the plural indoor units 10a and 10b are connected to the same refrigerant circuit, each of the indoor units 10a and 10b is checked for refrigerant leakage. Consequently, even if the refrigerant leaks in either of the indoor units 10a and 10b, the refrigerant leakage is detected at an early stage and the circulation of the refrigerant in the air-conditioning device 100 is stopped.

Also, since the operation of the fans 6a and 6b is resumed when it is confirmed by the refrigerant sensors 3a and 3b that there is no refrigerant leakage, normal operation can be continued.

Also, the fans 6a and 6b are stopped at the fixed-time control intervals before the refrigerant concentration can reach a lower explosive limit concentration and checks are made by the refrigerant sensors 3a and 3b. Consequently, any leakage can be detected before the refrigerant concentration can reach a level at which an explosion can occur.

Also, when the fans 6a and 6b stop operation according to the operation modes of the indoor units 10a and 10b, the refrigerant sensors 3a and 3b check for any refrigerant even if the fixed-time control interval T has not elapsed. This makes it possible to reduce frequency of stopping the fans 6a and 6b set for refrigerant leakage checking.

In particular, if the fans 6a and 6b stop when the indoor units 10a and 10b are in thermo-off operation or defrosting operation, the running times of the fans 6a and 6b are reset when normal operation is resumed, and the fixed-time control interval T is set again. This makes it possible to reduce a duration for which operation of the indoor units 10a and 10b are suspended.

### Embodiment 2

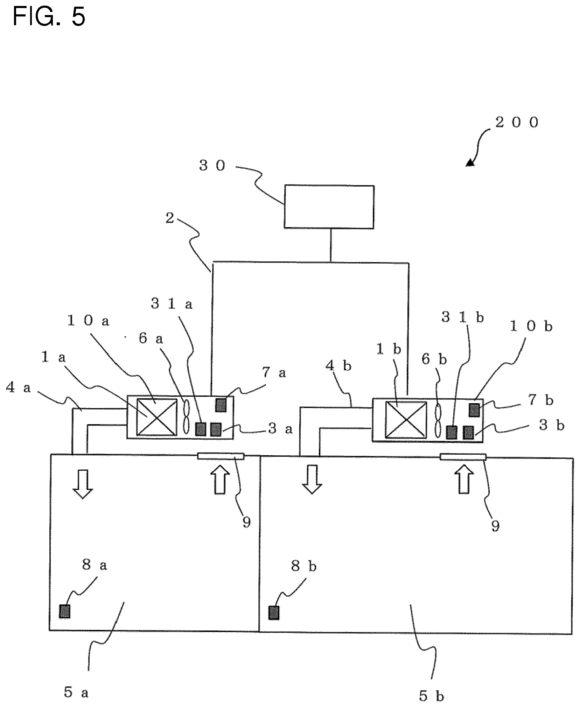

Fig. 5 is a schematic configuration diagram showing an example of an air-conditioning device 200 according to Embodiment 2 of the present invention. Embodiment 2 of the present invention differs from Embodiment 1 in that the air-conditioning device 200 includes high-sensitivity refrigerant sensors 31a and 31b. A basic configuration of the air-conditioning device 200 according to Embodiment 2 is similar to air-conditioning device 100 according to Embodiment 1, and thus Embodiment 2 will be described below by focusing on differences from Embodiment 1.

As shown in Fig. 5, the air-conditioning device 200 includes the refrigerant sensors 3a and 3b, and the high-sensitivity refrigerant sensors 31a and 31b higher in sensitivity than the refrigerant sensors 3a and 3b. As with the refrigerant sensors 3a and 3b, the high-sensitivity refrigerant sensors 31a and 31b are placed inside the indoor units 10a and 10b. The high-sensitivity refrigerant sensors 31a and 31b can detect refrigerant leakage even at such a low refrigerant concentration that the refrigerant sensors 3a and 3b cannot detect. The high-sensitivity refrigerant sensors 31a and 31b may use the same scheme as or different scheme from the refrigerant sensors 3a and 3b.

### <Refrigerant leakage checking control>

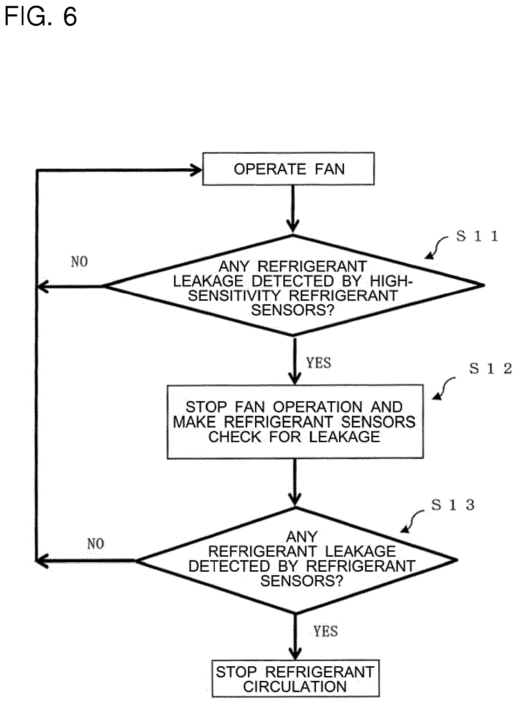

Fig. 6 is a flowchart explaining refrigerant leakage checking control performed by the air-conditioning device 200 according to Embodiment 2 of the present invention. As shown in Fig. 5, in the air-conditioning device 200, if refrigerant leakage is detected by the high-sensitivity refrigerant sensors 31a and 31b, the fans 6a and 6b are stopped forcibly and refrigerant leakage is checked for by the refrigerant sensors 3a and 3b.

In an initial state, the fans 6a and 6b perform normal operation according to the operation modes of the indoor units 10a and 10b. The operation modes may be those sets via the remote controls 8a and 8b.

First, in step S11, with the fans 6a and 6b performing normal operation, the controllers 7a and 7b make the high-sensitivity refrigerant sensors 31a and 31b check for refrigerant leakage. If no refrigerant is detected by the high-sensitivity refrigerant sensor 31a, normal operation is continued. If refrigerant is detected by the high-sensitivity refrigerant sensors 31a and 31b, the controllers 7a and 7b start implementing step S12. Note that the refrigerant leakage checks can be made periodically by the high-sensitivity refrigerant sensors 31a and 31b at predetermined time intervals.

Next, in step S12, the controllers 7a and 7b make the refrigerant sensors 3a and 3b check for refrigerant leakage by forcibly stopping the operation of the fans 6a and 6b, and then start implementing step S13.

Next, in step S13, the controllers 7a and 7b determine whether any refrigerant leakage has been detected by the refrigerant sensors 3a and 3b, and when it is determined that no refrigerant leakage has been detected, the controllers 7a and 7b return to the initial state and resume operation of the fans 6a and 6b.

On the other hand, when refrigerant leakage has been detected by the refrigerant sensors 3a and 3b in step S13, the controllers 7a and 7b stop the compressor of the outdoor unit 30 and stop the flow of refrigerant circulating through the air-conditioning device 200.

Only when refrigerant leakage is detected by the high-sensitivity refrigerant sensors 31a and 31b, refrigerant leakage is checked for by the refrigerant sensors 3a and 3b by forcibly stopping the fans 6a and 6b. Consequently, normal operation is continued when there is no refrigerant leakage, and the frequency at which operation is stopped is reduced.

Note that the high-sensitivity refrigerant sensors 31a and 31b are capable of make detection even at low refrigerant concentrations, but could make false detections. The adoption of double detection using the high-sensitivity refrigerant sensors 31a and 31b and the refrigerant sensors 3a and 3b with standard sensitivity makes it possible to detect any refrigerant leakage promptly even with a configuration in which the fans 6a and 6b do not stop at every fixed-time control interval.

The air-conditioning device 200 according to the embodiment of the present invention described above, adopts double detection using the high-sensitivity refrigerant sensors 31a and 31b and the refrigerant sensors 3a and 3b with standard sensitivity. This makes it possible to detect any refrigerant leakage promptly even with a configuration in which the fans 6a and 6b are not stopped periodically.

Note that description has been given above on a configuration in which the refrigerant sensors 3a and 3b and high-sensitivity refrigerant sensors 31a and 31b are placed inside the indoor units 10a and 10b. However, the refrigerant sensors 3a and 3b and high-sensitivity refrigerant sensors 31a and 31b may be placed outside the indoor units 10a and 10b, in which air currents of the fans 6a and 6b have an impact.

### Reference Signs List

1a, 1b indoor heat exchanger 2 outdoor unit connecting pipe3a, 3b refrigerant sensor 4a, 4b outlet duct5a, 5b room 6a, 6b fan 7a, 7b controller 8a, 8b remote control 9 intake grille 10a, 10b indoor unit 30 outdoor unit 31a, 31b high-sensitivity refrigerant sensor 100, 200 air-conditioning device

## Claims

1. An air-conditioning device (100) comprising an indoor unit (10a, 10b) that includes:
a heat exchanger (1a, 1b) configured for refrigerant flowing through the heat exchanger,
a refrigerant sensor (3a, 3b) configured to detect any refrigerant leaking from the heat exchanger (1a, 1b) into air,
a fan (6a, 6b) configured to send air to the heat exchanger (1a, 1b), and
a controller (7a, 7b) configured to control operation of the refrigerant sensor (3a, 3b) and the fan (6a, 6b),
wherein the controller (7a, 7b) is configured to stop operation of the fan (6a, 6b) and make the refrigerant sensor (3a, 3b) detect any refrigerant,
**characterized by**
the controller (7a, 7b) being configured to stop operation of the fan (6a, 6b) when running time of the indoor unit (10a, 10b) is within a predetermined fixed-time control interval; wherein
the indoor unit (10a, 10b) further includes a remote control (8a, 8b) for use to set a volume of a room (5a, 5b) in which the indoor unit (10a, 10b) is to be placed; and
the controller (7a, 7b):
prestores reference value data, which represents relationships between volumes of rooms (5a, 5b) and fixed-time control intervals, and
is configured to determine the fixed-time control interval based on the volume of the room (5a, 5b) set via the remote control (8a, 8b) and the reference value data;
the fixed-time control interval is shorter than time taken until refrigerant concentration in the room (5a, 5b) in which the indoor unit (10a, 10b) is placed reaches an explosive level;
the fixed-time control interval is determined from reference value data, prestored in the air-conditioning device (100), based on initial settings; and
the reference value data is a digitized form of a relationship between the volume of the room (5a, 5b) and time taken for the refrigerant concentration in the room (5a, 5b) to reach a minimum explosive concentration.

2. The air-conditioning device (100) of claim 1 comprising a plurality of indoor units (10a, 10b), wherein:
each indoor unit (10a, 10b) of the plurality of indoor units (10a, 10b) includes the heat exchanger (1a, 1b), the fan (6a, 6b), the refrigerant sensor (3a, 3b), and the controller (7a, 7b);
the heat exchangers (1a, 1b) of the respective indoor units (10a, 10b) are connected to a refrigerant system through which same refrigerant flows; and
the controllers (7a, 7b) of the respective indoor units (10a, 10b) are configured to stop operation of the respective fans (6a, 6b) and make the respective refrigerant sensors (3a, 3b) detect any refrigerant.

3. The air-conditioning device (100) of claim 1 or 2, wherein when no refrigerant is detected by the refrigerant sensor (3a, 3b), the controller (7a, 7b) is configured to resume operation of the fan (6a, 6b).

4. The air-conditioning device (100) of claim 2 or 3,wherein the air-conditioning device (100) includes a first indoor unit (10a) and a second indoor unit (10b) connected to the refrigerant system, wherein the second indoor unit (10b) is to be placed in a second room (5b) larger in volume than a first room (5a) in which the first indoor unit (10a) is to be placed, wherein the fixed-time control interval is set based on the volume of the first room (5a), and wherein the volume of the first room (5a) is set on each of the respective remote controls (8a, 8b) of the plurality of the indoor units (10a, 10b).

5. The air-conditioning device (100) of any one of claims 1 to 4, wherein, when operation of the fan (6a, 6b) is stopped before running time of the indoor unit (10a, 10b) reaches the fixed-time control interval, the controller (7a, 7b) is configured to make the refrigerant sensor (3a, 3b) detect any refrigerant.

6. The air-conditioning device (100) of any one of claims 1 to 5, wherein:
the indoor unit (10a, 10b) is configured to perform thermo-on operation in which the fan (6a, 6b) is operating and thermo-off operation in which the fan (6a, 6b) is stopped; and
the controller (7a, 7b) is configured to:
make the refrigerant sensor (3a, 3b) detect any refrigerant when the indoor unit (10a, 10b) starts the thermo-off operation, and
reset running time of the indoor unit (10a, 10b) to zero when the indoor unit (10a, 10b) is switched from the thermo-off operation to the thermo-on operation.

7. The air-conditioning device (100) of any one of claims 1 to 5, wherein:
the indoor unit (10a, 10b) is configured to perform heating operation in which the fan (6a, 6b) operates and defrosting operation in which the fan (6a, 6b) stops; and
the controller (7a, 7b) is configured to:
make the refrigerant sensor (3a, 3b) detect any refrigerant when the indoor unit (10a, 10b) starts the defrosting operation, and
reset running time of the indoor unit (10a, 10b) to zero when the indoor unit (10a, 10b) is switched from the defrosting operation to the heating operation.

## Patentansprüche

1. Klimaanlage (100), aufweisend eine Inneneinheit (10a; 10b), die aufweist:
einen Wärmetauscher (1a, 1b), der für durch den Wärmetauscher strömendes Kältemittel ausgelegt ist,
einen Kältemittelsensor (3a, 3b), der eingerichtet ist, jegliches aus dem Wärmetauscher (1a, 1b) in die Luft austretendes Kältemittel zu erfassten,
ein Gebläse (6a, 6b), das eingerichtet ist, Luft zu dem Wärmetauscher (1a, 1b) zu leiten; und
eine Steuereinheit (7a, 7b), die eingerichtet ist, einen Betrieb des Kältemittelsensors (3a, 3b) und des Gebläses (6a, 6b) zu steuern,
wobei die Steuereinheit (7a, 7b) eingerichtet ist, den Betrieb des Gebläses (6a, 6b) zu stoppen und den Kältemittelsensor (3a, 3b) zu veranlassen, jegliches Kältemittel zu erfassen, **dadurch gekennzeichnet, dass**
die Steuerung (7a, 7b) eingerichtet ist, den Betrieb des Gebläses (6a, 6b) zu stoppen, wenn die Laufzeit der Inneneinheit (10a, 10b) innerhalb eines vorbestimmten Festzeit-Steuerintervalls liegt; wobei
die Inneneinheit (10a, 10b) ferner eine Fernsteuerungseinrichtung (8a, 8b) zur Verwendung zum Einstellen eines Volumens eines Raums (5a, 5b), in dem die Inneneinheit (10a, 10b) platziert werden soll, aufweist; und
die Steuereinheit (7a, 7b):
Referenzwertdaten vorspeichert, die Beziehungen zwischen Volumen von Räumen (5a, 5b) und Festzeit-Steuerintervallen darstellen, und
eingerichtet ist, das Festzeit-Steuerintervall auf der Grundlage des über die Fernsteuerungseinrichtung (8a, 8b) eingestellte Volumen des Raums (5a, 5b) und der Referenzwertdaten zu bestimmen;
das Festzeit-Steuerintervall ist kürzer ist als die Zeit, die vergeht, bis die Kältemittelkonzentration in dem Raum (5a, 5b), in dem sich die Inneneinheit (10a, 10b) platziert ist, ein explosionsfähiges Niveau erreicht;
das Festzeit-Steuerintervall wird aus in der Klimaanlage (100) vorgespeicherten Referenzwertdaten auf der Grundlage von Anfangseinstellungen bestimmt; und
die Referenzwertdaten sind eine digitalisierte Form einer Beziehung zwischen dem Volumen des Raums (5a, 5b) und der Zeit, die benötigt wird, bis die Kältemittelkonzentration im Raum (5a, 5b) eine minimale explosive Konzentration erreicht.

2. Klimaanlage (100) nach Anspruch 1, aufweisend eine Vielzahl von Inneneinheiten (10a, 10b), wobei:
jede Inneneinheit (10a, 10b) der mehreren Inneneinheiten (10a, 10b) den Wärmetauscher (1a, 1b), das Gebläse (6a, 6b), den Kältemittelsensor (3a, 3b) und die Steuereinheit (7a, 7b) umfasst;
die Wärmetauscher (1a, 1b) der jeweiligen Inneneinheiten (10a, 10b) mit einem Kältemittelsystem verbunden sind, durch das dasselbe Kältemittel strömt; und
die Steuereinheiten (7a, 7b) der jeweiligen Inneneinheiten (10a, 10b) eingerichtet sind, den Betrieb der jeweiligen Gebläse (6a, 6b) zu stoppen und die jeweiligen Kältemittelsensoren (3a, 3b) zu veranlassen, jegliches Kältemittel zu erfassen.

3. Klimaanlage (100) nach Anspruch 1 oder 2, wobei, wenn der Kältemittelsensor (3a, 3b) kein Kältemittel erfasst, die Steuerung (7a, 7b) eingerichtet ist, den Betrieb des Gebläses (6a, 6b) wieder aufzunehmen.

4. Klimaanlage (100) nach Anspruch 2 oder 3, wobei die Klimaanlage (100) eine erste Inneneinheit (10a) und eine zweite Inneneinheit (10b) aufweist, die mit dem Kältemittelsystem verbunden ist, wobei die zweite Inneneinheit (10b) in einem zweiten Raum (5b) zu platzieren ist, der ein größeres Volumen aufweist als ein erster Raum (5a), in dem die erste Inneneinheit (10a) zu platzieren ist, wobei das Festzeit-Steuerintervall auf der Grundlage des Volumens des ersten Raums (5a) eingestellt wird, und wobei das Volumen des ersten Raums (5a) auf jeder der jeweiligen Fernsteuerungseinrichtung (8a, 8b) der Vielzahl der Inneneinheiten (10a, 10b) eingestellt wird.

5. Klimaanlage (100) nach einem der Ansprüche 1 bis 4, wobei, wenn der Betrieb des Gebläses (6a, 6b) gestoppt wird, bevor die Laufzeit der Inneneinheit (10a, 10b) das Festzeit-Steuerintervall erreicht, die Steuerung (7a, 7b) eingerichtet ist, den Kältemittelsensor (3a, 3b) zu veranlassen, jegliches Kältemittel zu erfassen.

6. Klimaanlage (100) nach einem der Ansprüche 1 bis 5, wobei:
die Inneneinheit (10a, 10b) eingerichtet ist, einen Thermo-Ein-Betrieb, bei dem das Gebläse (6a, 6b) in Betrieb ist, und einen Thermo-Aus-Betrieb, bei dem das Gebläse (6a, 6b) gestoppt ist, durchzuführen; und
die Steuereinheit (7a, 7b) ist dazu eingerichtet:
den Kältemittelsensor (3a, 3b) veranlassen, jegliches Kältemittel zu erfassen, wenn die Inneneinheit (10a, 10b) den Thermo-Aus-Betrieb beginnt, und
die Laufzeit der Inneneinheit (10a, 10b) auf Null zurückzustellen, wenn die Inneneinheit (10a, 10b) vom Thermo-Aus-Betrieb in den Thermo-Ein-Betrieb geschaltet wird.

7. Klimaanlage (100) nach einem der Ansprüche 1 bis 5, wobei:
die Inneneinheit (10a, 10b) eingerichtet ist, einen Heizbetrieb, bei dem das Gebläse (6a, 6b) arbeitet, und einen Abtaubetrieb, bei dem das Gebläse (6a, 6b) stoppt, durchzuführen; und
die Steuereinheit (7a, 7b) dazu eingerichtet ist:
den Kältemittelsensor (3a, 3b) zu veranlassen, jegliches Kältemittel zu erkennen, wenn die Inneneinheit (10a, 10b) den Abtaubetrieb beginnt, und
die Laufzeit der Inneneinheit (10a, 10b) auf Null zurückzustellen, wenn die Inneneinheit (10a, 10b) vom Abtau- auf den Heizbetrieb umgeschaltet wird.

## Revendications

1. Dispositif de climatisation (100) comprenant une unité interne (10a, 10b) qui comprend :
un échangeur de chaleur (1a, 1b) conçu pour l'écoulement d'un réfrigérant à travers l'échangeur de chaleur,
un capteur de réfrigérant (3a, 3b) conçu pour détecter toute fuite de réfrigérant de l'échangeur de chaleur (1a, 1b) vers l'air,
un ventilateur (6a, 6b) conçu pour envoyer de l'air à l'échangeur de chaleur (1a, 1b) et
un contrôleur (7a, 7b) conçu pour contrôler le fonctionnement du capteur de réfrigérant (3a, 3b) et du ventilateur (6a, 6b),
dans lequel le contrôleur (7a, 7b) est conçu pour arrêter le fonctionnement du ventilateur (6a, 6b) et faire en sorte que le capteur de réfrigérant (3a, 3b) détecte un réfrigérant, **caractérisé par**
le contrôleur (7a, 7b) étant conçu pour arrêter le fonctionnement du ventilateur (6a, 6b) lorsque le temps de fonctionnement de l'unité interne (10a, 10b) est dans une intervalle de temps de commande fixe prédéterminé ; dans lequel
l'unité interne (10a, 10b) comprend en outre une commande à distance (8a, 8b) destinée à régler un volume d'une pièce (5a, 5b) dans laquelle l'unité interne (10a, 10b) doit être placée ; et
le contrôleur (7a, 7b) :
pré-enregistre des données de valeurs de référence, qui représentent les relations entre les volumes de pièces (5a, 5b) et des intervalles de temps de commande fixe et
est conçu pour déterminer l'intervalle de temps de commande fixe sur la base du volume de la pièce (5a, 5b) réglé via la commande à distance (8a, 8b) et les données de valeurs de référence ;
l'intervalle de temps de commande fixe est plus court que le temps nécessaire jusqu'à ce que la concentration en réfrigérant dans la pièce (5a, 5b) dans laquelle l'unité interne (10a, 10b) est placée atteigne un niveau explosif;
l'intervalle de temps de commande fixe est déterminé à partir des données de valeurs de référence, pré-enregistrées dans le dispositif de climatisation (100), sur la base de réglages initiaux ; et
les données de valeurs de référence est une forme numérisée d'une relation entre le volume de la pièce (5a, 5b) et le temps nécessaire pour que la concentration en réfrigérant dans la pièce (5a, 5b) atteigne une concentration explosive minimale.

2. Dispositif de climatisation (100) selon la revendication 1, comprenant une pluralité d'unités internes (10a, 10b), dans lequel :
chaque unité interne (10a, 10b) de la pluralité d'unités internes (10a, 10b) comprend l'échangeur de chaleur (1a, 1b), le ventilateur (6a, 6b), le capteur de réfrigérant (3a, 3b) et le contrôleur (7a, 7b) ;
les échangeurs de chaleur (1a, 1b) des unités internes (10a, 10b) respectives sont connectés à un système de réfrigérant à travers lequel le réfrigérant s'écoule ; et
les contrôleurs (7a, 7b) des unités internes (10a, 10b) respectives sont conçus pour arrêter le fonctionnement des ventilateurs (6a, 6b) respectifs et faire en sorte que les capteurs de réfrigérant (3a, 3b) respectifs détecte un réfrigérant.

3. Dispositif de climatisation (100) selon la revendication 1 ou 2, dans lequel, lorsqu'aucun réfrigérant n'est détecté par le capteur de réfrigérant (3a, 3b), le contrôleur (7a, 7b) est conçu pour reprendre le fonctionnement du ventilateur (6a, 6b).

4. Dispositif de climatisation (100) selon la revendication 2 ou 3, dans lequel, le dispositif de climatisation (100) comprend une première unité interne (10a) et une deuxième unité interne (10b), connectées au système de réfrigérant, dans lequel la deuxième unité interne (10b) doit être placée dans une deuxième pièce (5b) plus grande en volume qu'une première pièce (5a) dans laquelle la première unité interne (10a) doit être placée, dans lequel l'intervalle de temps de commande fixe est réglé sur la base du volume de la première pièce (5a) et dans lequel le volume de la première pièce (5a) est réglé sur chacune des commandes à distance (8a, 8b) respectives de la pluralité d'unités internes (10a, 10b).

5. Dispositif de climatisation (100) selon l'une des revendications 1 à 4, dans lequel, lorsque le fonctionnement du ventilateur (6a, 6b) est arrêté avant que le temps de fonctionnement de l'unité interne (10a, 10b) atteigne l'intervalle de temps de commande fixe, le contrôleur (7a, 7b) est conçu pour faire en sorte que le capteur de réfrigérant (3a, 3b) détecte un réfrigérant.

6. Dispositif de climatisation (100) selon l'une des revendications 1 à 5, dans lequel :
l'unité interne (10a, 10b) est conçue pour effectuer un fonctionnement thermo-on dans lequel le ventilateur (6a, 6b) fonctionne et un fonctionnement thermo-off dans lequel le ventilateur (6a, 6b) est arrêté ; et
le contrôleur (7a, 7b) est conçu pour :
faire en sorte que le capteur de réfrigérant (3a, 3b) détecte un réfrigérant lorsque l'unité interne (10a, 10b) démarre le fonctionnement thermo-off et
réinitialiser le temps de fonctionnement de l'unité interne (10a, 10b) à zéro lorsque l'unité interne (10a, 10b) passe du fonctionnement thermo-off au fonctionnement thermo-on.

7. Dispositif de climatisation (100) selon l'une des revendications 1 à 5, dans lequel :
l'unité interne (10a, 10b) est conçue pour effectuer un fonctionnement de chauffage dans lequel le ventilateur (6a, 6b) fonctionne et un fonctionnement de dégivrage dans lequel le ventilateur (6a, 6b) s'arrête ; et
le contrôleur (7a, 7b) est conçu pour :
faire en sorte que le capteur de réfrigérant (3a, 3b) détecte un réfrigérant lorsque l'unité interne (10a, 10b) démarre le fonctionnement de dégivrage et
réinitialiser le temps de fonctionnement de l'unité interne (10a, 10b) à zéro lorsque l'unité interne (10a, 10b) passe du fonctionnement de dégivrage au fonctionnement de chauffage.
